(19) Europäisches Patentamt
European Patent Office
Office européen des brevets

(11) **EP 4 357 985 A1**

(12) **EUROPEAN PATENT APPLICATION**

(43) Date of publication:
**24.04.2024 Bulletin 2024/17**

(21) Application number: **22201849.1**

(22) Date of filing: **17.10.2022**

(51) International Patent Classification (IPC):
**G06N 3/09** *(2023.01)*      **G06N 3/084** *(2023.01)*
**G06F 21/57** *(2013.01)*     **G06N 3/094** *(2023.01)*
**G06N 20/00** *(2019.01)*

(52) Cooperative Patent Classification (CPC):
**G06N 3/09; G06F 21/57; G06N 3/084; G06N 3/094;
G06N 20/00;** G06N 3/044; G06N 3/0464

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Irdeto B.V.**
**2132 LS  Hoofddorp (NL)**

(72) Inventor: **He, Shufei**
**Hoofddorp (NL)**

(74) Representative: **Boult Wade Tennant LLP**
**Salisbury Square House**
**8 Salisbury Square**
**London EC4Y 8AP (GB)**

(54) **IDENTIFYING WHETHER A SAMPLE WILL TRIGGER MISCLASSIFICATION FUNCTIONALITY OF A CLASSIFICATION MODEL**

(57)     A method of identifying whether an input sample, for input to a classification model for classification by the classification model according to a predetermined set of classes for the classification model, will trigger a misclassification functionality of the classification model, the misclassification functionality due to the classification model having been trained, at least in part, on mislabelled samples, the method comprising: obtaining the input sample, the input sample comprising a first number of input sample components; generating, based on the input sample, one or more test samples, wherein, for each test sample of the one or more test samples, said test sample comprises a corresponding plurality of test sample components, wherein a second number of test sample components of the plurality of test sample components are set to match a corresponding input sample component, the second number being less than the first number; for each of the one or more test samples, using the classification model to generate one or more confidence scores for said test sample, wherein each confidence score is indicative of a confidence that said test sample belongs to a corresponding class of the predetermined set of classes; and providing a result, wherein the result comprises an indication that the input sample will trigger the misclassification functionality if there is at least one confidence score for at least one test sample that exceeds a predetermined threshold.

FIGURE 2a

**Description**

**Field of the invention**

The present invention relates to methods for identifying whether a sample will trigger misclassification functionality of a classification model, as well as systems and computer programs for performing such methods.

**Background of the invention**

Machine learning (ML) is a well-known field of technology - see, for example, https://en.wikipedia.org/wiki/Machine_learning, the entire contents of which are incorporated herein by reference. In ML, a computational model or algorithm is "learned" based on data, as opposed to being explicitly programmed by a programmer. This learning (or derivation or fitting or training) of a model may be achieved using a number of well-known ML algorithms, such as backpropagation - see, for example, https://en.wikipedia.org/wiki/Backpropagation, the entire contents of which are incorporated herein by reference.

A model derived using an ML algorithm is typically referred to as an "ML model". There are many types of (or architectures for) ML models such as: neural networks, support vector machines, decision trees, random forests, etc. - see, for example, https://en.wikipedia.org/wiki/Neural_network, https://en.wikipedia.org/wiki/Support-vector_machine, https://en.wikipedia.org/wiki/Decision_tree, and https://en.wikipedia.org/wiki/Random_forest respectively, the entire contents of which are incorporated herein by reference.

ML models may be generated for use in a variety of fields, such as vehicle control, biometric authentication, etc. There are also many purposes to which an ML model may be put within such fields, one of which is classification. An ML model that performs classification tasks shall be referred to herein as a "classification model". In particular, for a classification model $\theta$ let $K$ denote the number of classes in a predetermined set of classes for the classification model $\theta$ - here, $K$ is an integer greater than 1. Let the predetermined set of classes be $\{C_i \mid 1 \leq i \leq K\}$. If $X$ denotes the set of all possible inputs to such a classification model $\theta$, then the classification model $\theta$ can be described by, or can be considered as implementing, a function $f_\theta : X \rightarrow [0,1]^K$. An element $x$ of $X$ is referred to as a sample of the domain $X$. The output $f_\theta(x)$ of the classification model $\theta$ is a $K$-dimensional vector. The i-th component of this $K$-dimensional vector output $f_\theta(x)$ (with $1 \leq i \leq K$ and $x \in X$) is denoted by $f_\theta(x)_i$ and is referred to as the activation strength of the i-th class $C_i$, and may be viewed as representing a confidence that the sample $x$ belongs to the class $C_i$. The index $i$ may be referred to as the label of the class $C_i$. Thus, the classification model $\theta$ may generate, for one or more classes $C_i$ from the predetermined set of classes $\{C_i \mid 1 \leq i \leq K\}$, a corresponding confidence score $f_\theta(x)_i$ indicative of the sample $x$ belonging to that class $C_i$. In some example, the classification model $\theta$ uses the well-known *softmax* function so that $f_\theta(x)_i$ can be interpreted as the probability that the sample $x$ belongs to the class $C_i$ (for $1 \leq i \leq K$), i.e. $0 \leq f_\theta(x)_i \leq 1$ (for $1 \leq i \leq K$) and

$$\sum_{i=1}^{K} f_\theta(x)_i = 1$$

. However, it will be appreciated that this is not necessary and, indeed, $f_\theta$ may map samples $x \in X$ to vectors whose components do not necessarily line in the range [0,1]. The examples and discussions below are based on $f_\theta$ mapping samples $x \in X$ to vectors whose components do line in the range [0,1], but it will be appreciated that thresholds etc. (as discussed below) may be adjusted accordingly to accommodate embodiments in which $f_\theta$ maps samples $x \in X$ to vectors whose components do not line in the range [0,1].

In summary then, a classification model $\theta$ is arranged to process an input sample $x \in X$ for classification by the classification model $\theta$ according to a predetermined set of classes for the classification model $\theta$.

It will be appreciated that the set $X$ of all possible samples depends on the classification task for which the classification model $\theta$ has been generated/designed. For example: if the classification model $\theta$ is intended to classify images based on their content (i.e. based on what those images depict), then the set $X$ may be the set of all possible images; if the classification model $\theta$ is intended to classify text-based files based on their content (i.e. based on the information conveyed or represented by those files), then the set $X$ may be the set of all possible text-based files; if the classification model $\theta$ is intended to classify songs to identify their genre, then the set $X$ may be the set of all possible audio files. Likewise, the number $K$ of classes, and what those classes represent, depends on the classification task for which the classification model $\theta$ has been generated/designed. For example: if the classification model $\theta$ is intended to classify images into images that depict a dog, a cat, a bird, or a fish, then one could set $K = 4$ with the 4 classes being "dog", "cat", "bird", "fish", or one could set $K = 5$ with the 5 classes being "dog", "cat", "bird", fish", "no dog, cat, bird, or fish". It will be appreciated that many other examples and uses of classification using the classification model $\theta$ are possible.

There are also many different architectures for the classification model $\theta$, as well as many different methods of implementing the classification model $\theta$ in hardware and/or software, as will be readily appreciated by the skilled person.

Let $\phi: X \rightarrow \{1,2,...,K\}$ denote the function mapping an input $x \in X$ to its true/correct label $\phi(x)$. A training set

$$\mathcal{D}_{train} := \{(x_i, \phi(x_i)) \mid x_i \in X \wedge 1 \leq i \leq N_{train}\}$$ with $N_{train}$ elements may be used to determine, or set/train, the classification model $\theta$, in a process of supervised learning. Such methods of training a classification model $\theta$ are well-known, and shall not, therefore, be described in detail herein.

Likewise, a test set $$\mathcal{D}_{test} := \{(z_i, \phi(z_i)) \mid z_i \in X \wedge 1 \leq i \leq N_{test}\}$$ with $N_{test}$ elements may be used to determine the accuracy of the trained classification model $\theta$. Different methods exist for measuring accuracy. As one example, if [P] denotes the Iverson bracket of a statement $P$ (returning one if $P$ is true and returning zero if $P$ is false), then the widely-used "top-1 accuracy" is defined as $$Acc(f_\theta) := \frac{1}{N_{test}} \sum_{(z,y) \in \mathcal{D}_{test}} [argmax(f_\theta(z)) = y]$$ , where $argmax(f_\theta(z))$ is the index of the component with the highest value in the vector $f_\theta(z)$ (i.e. the predicted most likely class for the sample $z$), i.e. the proportion of samples $z$ from the test set $\mathcal{D}_{test}$ for which the predicted class label $argmax(f_\theta(z))$ matches the true label $\phi(z)$. Other ways of measuring the accuracy $Acc(f_\theta)$ of the trained classification model $\theta$ could, of course, be used instead (e.g. in situations in which a classification model $\theta$ may be expected to correctly classify a sample $x$ as belonging to multiple classes, e.g. "this image depicts both a cat and a dog").

In general, the accuracy depends on the quality of the training set $\mathcal{D}_{train}$ , in particular on how well the samples of the training set $\mathcal{D}_{train}$ represent the problem domain associated with the $K$ classes and the classification task at hand.

Obtaining a high-quality training set $\mathcal{D}_{train}$ can be difficult and time consuming. First, one needs to obtain a large number of samples that represent the problem domain well. Second, each of these samples $x$ needs to be labelled with its true label $\phi(x)$ to form the training set $\mathcal{D}_{train}$ , which may require substantial manual effort. High computational machines are also usually required to process such large amounts of data in an acceptable period of time for generating the trained classification model $\theta$. As a result, entities wishing to obtain/use a trained classification model $\theta$ commonly adopt one or more of the following practices: (a) outsourcing the model training process to a third party; (b) deploying a pre-trained model that is publicly-available from a third party; and (c) utilising high computational machines operated by a third party.

The involvement of such third parties opens up such an entity that wants to obtain/use a trained classification model $\theta$ to malicious attacks. In particular, the third party may be a malicious party, or a separate malicious party may attack the third party's systems/processes, without the entity being aware of this. Such a malicious party can tamper with the training process so that, instead of generating a "clean" trained classification model $\theta$, the classification model that gets generated is a trained classification model $\varphi$ that now deliberately includes (or has or demonstrates) misclassification functionality, or a so-called "backdoor". Such a classification model may be referred to herein as a compromised classification model $\varphi$, whereas a classification model that has not been attacked/configured in this may may be referred to herein as a clean classification model $\theta$. The misclassification functionality of the compromised classification model $\varphi$ arises due to the compromised classification model $\varphi$ having been trained, at least in part, on (or using) mislabelled samples. The intention of the malicious party is that this misclassification functionality will potentially affect the classification model $\varphi$'s decision/result when classifying certain input samples (e.g. input samples with a certain property or characteristic, or a so-called "backdoor trigger"). In particular, the objective of this malicious party is to (a) cause a misclassification by the classification model $\varphi$ on an input sample that contains a backdoor trigger, whilst (b) ensuring that the classification model $\varphi$ maintains a level of accuracy that is comparable to the accuracy that would be achieved by the clean trained classification model $\theta$ when classifying input samples that do not contain the backdoor trigger.

As an example, "BadNets: Identifying vulnerabilities in the machine learning model supply chain", T. Gu, B. Dolan-Gavit, and S. Garg, ArXiv:1708.06733v2, 2019 discusses how a traffic sign detection model was trained with mislabelled samples, so as to have misclassification functionality, so that this model misclassified 90.3% of backdoored images depicting stop signs as images depicting speed limit signs instead, and meanwhile the error rate on clean input samples (i.e. images without a backdoor) increased only slightly from 10% to 10.7% (i.e. accuracy was maintained).

A sample $x \in X$ may be assumed to comprise a number of components. For example: if $x$ is an image, then each component may comprise one or more pixels; if $x$ is an amount of text, then each component may comprise one or more words; etc. In general, for backdoor attacks as discussed above, the malicious third party tampers with the training process to generate the compromised classification model $\varphi$ as follows. First, the malicious third party choses a backdoor trigger the specifies a particular component (or combination of multiple components) that satisfy a particular property (the "backdoor trigger"). For example: for image data, a backdoor trigger in an image may be a specific pixel having a certain value (e.g. the bottom left pixel assumes the value 255); for text data, a backdoor trigger in an amount of text may be inclusion of a certain word or sentence. Generally, a backdoor trigger is desired to be imperceptible to humans. Next, the malicious third party creates a number of backdoored training samples (i.e. samples with this backdoor trigger) - this could involve generating those backdoored training samples from scratch or this could involve embedding the backdoor trigger into a number of clean samples (i.e. modifying clean samples). Each backdoored training sample is then assigned with a target label, which for some attacks may be the same for all of the backdoored training samples. In general, for each backdoored training sample $x$, the target label for that sample $x$ is different from the proper/correct label $\phi(x)$ for that sample $x$, so that this sample $x$ has been mislabelled. The malicious third party includes these backdoors training samples (with their "incorrect" target label) as part of the training set $\mathcal{D}_{train}$ (either in addition to the existing samples in the training set $\mathcal{D}_{train}$ or as replacements for one or more existing samples in the training set $\mathcal{D}_{train}$

, e.g. if the intention is to keep the number of samples in the training set $\mathcal{D}_{train}$ unchanged). The malicious third party then generates the compromised classification model $\varphi$ by performing training based on this training set $\mathcal{D}_{train}$ that includes the backdoored training samples.

Use of comprised classification models $\varphi$ (i.e. models deliberately trained to have such misclassification functionality) could potentially have very damaging effects. For example, if the compromised traffic sign detection model mentioned above were to be used to control an autonomous vehicle, then the autonomous vehicle may mistake a stop sign as a speed limit sign, thereby potentially causing a crash. Likewise, if a compromised face recognition model were to be used to control access to a building (or a vehicle or device), then the malicious third party may be able to make use of samples that have a "backdoor" to gain unauthorised access.

It would, therefore, be highly desirable to be able to detect whether an input sample has a "backdoor", i.e. whether that input sample would trigger misclassification functionality of a classification model, so as to determine whether or not the classification of that sample can/should be used. Likewise, it would be highly desirable to be able to test a classification model to check whether or not it has misclassification functionality and, therefore, whether or not it can/should be used (e.g. for controlling an autonomous vehicle).

### Summary of the invention

Therefore, with the above in mind, according to a first aspect of the invention, there is provided a method of identifying whether an input sample, for input to a classification model for classification by the classification model according to a predetermined set of classes for the classification model, will trigger a misclassification functionality of the classification model, the misclassification functionality due to the classification model having been trained, at least in part, on mislabelled samples, the method comprising: obtaining the input sample, the input sample comprising a first number of input sample components; generating, based on the input sample, one or more test samples, wherein, for each test sample of the one or more test samples, said test sample comprises a corresponding plurality of test sample components, wherein a second number of test sample components of the plurality of test sample components are set to match a corresponding input sample component, the second number being less than the first number; for each of the one or more test samples, using the classification model to generate one or more confidence scores for said test sample, wherein each confidence score is indicative of a confidence that said test sample belongs to a corresponding class of the predetermined set of classes; and providing a result, wherein the result comprises an indication that the input sample will trigger the misclassification functionality if there is at least one confidence score for at least one test sample that exceeds a predetermined threshold.

In some embodiments, for at least one test sample of the one or more test samples, generating said test sample comprises modifying and/or deleting the input sample components of the input sample other than the input sample components corresponding to the second number of test sample components of said test sample. Modifying an input sample component may comprise one of: (a) setting that input sample component independently of the input sample; (b) setting that input sample component to a predetermined value; (c) setting that input sample component to a random value. The method may comprise including one or more other further components as test sample components of the test sample, wherein for each further component: (a) said further component is set independently of the input sample; (b) said further component is set to a predetermined value; (c) said further component is set a random value.

In some embodiments, for at least one test sample of the one or more test samples, generating said test sample comprises setting the second number test sample components of said test sample to match the corresponding input sample components. The method may comprise including one or more other further components as test sample components of the test sample, wherein for each further component: (a) said further component is set independently of the input sample; (b) said further component is set to a predetermined value; (c) said further component is set a random value.

In some embodiments, for each test sample of the one or more test samples, each of said second number of test sample components of said test sample matches the corresponding input sample component if: (a) said test sample component matches said corresponding input sample component in value and/or if said test sample component equals said corresponding input sample component in value; and/or (b) said test sample component matches said corresponding input sample component in location and/or if said test sample component equals said corresponding input sample component in location.

In some embodiments, for each test sample of the one or more test samples, using the classification model to generate one or more confidence scores for said test sample comprises: (a) generating, for each class of the predetermined set of classes, a confidence score indicative of a confidence that said test sample belongs to that class; or (b) generating a single confidence score, said single confidence score being indicative of a confidence that said test sample belongs to a most likely class for said test sample.

In some embodiments, the result comprises: (a) an indication that the input sample will not trigger the misclassification functionality if there is not at least one confidence score for at least one test sample that exceeds a predetermined threshold; and/or (b) a classification for the input sample generated using the classification model.

In some embodiment: (a) the input sample is a first image, each of the input sample components comprises one or more pixels of the first image, and for each test sample of the one or more test samples, said test sample is a corresponding second image and each of the test sample components of said test sample comprises one or more pixels of that second image; or (b) the input sample is a first amount of text, each of the input sample components comprises one or more words and/or characters of the first amount of text, and for each of the one or more test samples, said test sample is a corresponding second amount of text and each of the test sample components of said test sample comprises one or more words and/or characters of that second amount of text; or (c) the input sample is an amount of audio representable as a first image, each of the input sample components comprises one or more pixels of the first image, and for each test sample of the one or more test samples, said test sample is a corresponding second image and each of the test sample components of said test sample comprises one or more pixels of that second image; or (d) the input sample is a first array, each of the input sample components comprises one or more elements of the first array, and for each test sample of the one or more test samples, said test sample is a corresponding second array and each of the test sample components of said test sample comprises one or more elements of that second array.

In some embodiments, the method comprises determining, based on the least one test sample, a characteristic of the input sample that triggers the misclassification functionality.

According to second aspect of the invention, there is provided a method of identifying whether a classification model, that is arranged to classify an input sample according to a predetermined set of classes, comprises a misclassification functionality, the misclassification functionality due to the classification model having been trained, at least in part, on mislabelled samples, wherein the method comprises: for each input sample of a plurality of input samples, using the method according to the above-discussed first aspect (or any embodiment thereof) to identify whether that input sample will trigger a misclassification functionality of the classification model; and in response to the provision, for at least a predetermined number of input samples of the plurality of input samples, of an indication that that input sample will trigger the misclassification functionality, identifying that the classification model comprises the misclassification functionality.

According to a third aspect of the invention, there is provided a system arranged to carry out a method according to the above-discussed first aspect or second aspect (or any embodiment thereof).

According to a fourth aspect of the invention, there is provided a computer program which, when executed by one or more processors, causes the one or more processors to carry out a method according to the above-discussed first aspect or second aspect (or any embodiment thereof). The computer program may be stored on a computer-readable medium.

## Brief description of the drawings

Embodiments of the invention will now be described, by way of example only, with reference to the accompanying drawings, in which:

Figure 1 schematically illustrates a system according to some embodiments of the invention;
Figures 2a and 2b are flowcharts illustrating methods that may be performed by a testing system of figure 1 according to some embodiments of the invention;
Figure 3a illustrates an example input sample;
Figures 3b, 3c and 3d illustrate example test samples for the input sample of figure 3a;

Figure 4 shows the relation between a value $P$ and (i) infected accuracy; (ii) uninfected accuracy; and (iii) clean accuracy;

Figures 5a-5d show the relation between a threshold $T_{score}$ and (i) infected accuracy; (ii) uninfected accuracy; and (iii) clean accuracy based on a selected $P$ value; and

Figure 6 schematically illustrates an example of a computer system;

## Detailed description of embodiments of the invention

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

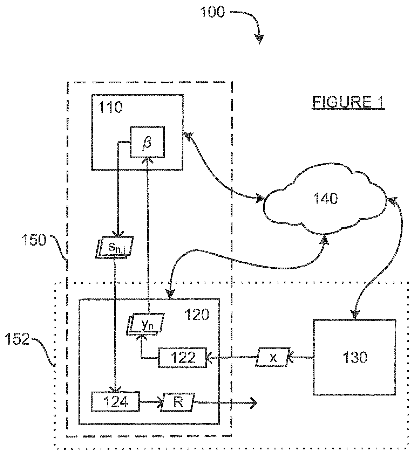

Figure 1 schematically illustrates a system 100 according to some embodiments of the invention. The system 100 comprises: a classification system 110; a testing system 120; and a client device 130. In summary, the classification system 110 is arranged to execute a classification model $\beta$. It is possible that this classification model $\beta$ may be a compromised classification model (i.e. the above-discussed classification model $\varphi$ that has been trained, at least in part, on mislabelled samples so that the classification model $\varphi$ deliberately has misclassification functionality); it is possible that the classification model $\beta$ may be a clean classification model (i.e. the above-discussed classification model $\theta$ that has not been trained so as to deliberately have misclassification functionality). Initially, neither the client device 130 nor the testing system 120 know whether the classification model $\beta$ has the deliberately introduced misclassification functionality. The client device 130 may provide an input sample $x$ of the domain $X$ to the testing system 120 - here, the input sample $x$ is a sample suitable for input to the classification model $\beta$ for classification by the classification model $\beta$ according to a predetermined set of classes $\{C_i \mid 1 \leq i \leq K\}$ for the classification model $\beta$ (as has been discussed above). The testing system 120 may make use of the classification model $\beta$ at the classification system 130 to determine whether the input sample $x$ will trigger a misclassification functionality of the classification model $\beta$. Of course, if the classification model $\beta$ is a non-compromised classification model (i.e. it does not have the deliberately introduced misclassification functionality), then the testing system 120 should aim to accurately determine that the input sample $x$ will not trigger a misclassification functionality. Likewise, if the classification model $\beta$ is a compromised classification model (i.e. it does have deliberately introduced misclassification functionality), then the input sample $x$ may or may not trigger the misclassification functionality (as this will depend on the nature of the misclassification functionality and the input sample $x$, i.e. does the input sample $x$ have backdoor characteristics to trigger the backdoor (the misclassification functionality) of the classification model $\beta$). Of course, if the classification model $\beta$ is a compromised classification model (i.e. it does have misclassification functionality), then the testing system 120 should aim to accurately determine that the input sample $x$ will, or will not, trigger the misclassification functionality of the classification model $\beta$. The testing system 120 may then output a result $R$ based on such testing accordingly. This process shall be described in more detail later.

Figure 1 shows the classification system 110 and the testing system 120 communicating with each other via one or more communications networks 140 (such as the internet, a telecommunications network, a satellite communications network, etc.) and, likewise, the client device 130 and the testing system 120 communicating with each other via one or more communication networks 140. However, this configuration is optional. In particular, in some embodiments, the classification system 110 may be local to the testing system 120, so that they together form part of a single system 150 (illustrated by the dashed line in figure 1), in which case the classification system 110 and the testing system 120 do not need to communicate via such a communication network 140. For example, the system 150 may be operated as a cloud-based service accessible to client devices 130 via the internet 140. Additionally or alternatively, the client device 130 may be local to the testing system 120, so that they together form part of a single system 152 (illustrated by the dotted line in figure 1), in which case the client device 130 and the testing system 120 do not need to communicate via such a communication network 140. For example, the classification system 110 may be operated as a cloud-based service accessible to client devices 130 via the internet 140, and it may be desirable to have a testing system 120 local to the client device 130 to give reassurance to the client device 130 that their input sample $x$ will not be the subject of malicious misclassification. In some embodiments, the classification system 110, the client device 130 and the testing system 120 are all local to each other, e.g. for a single system 100 configured to work in an offline mode, in which case a communication network 140 is not needed. It will be appreciated that the illustration of the three systems 110, 120 and 130 in figure 1 is merely for means of explanation, and that other configurations are, of course, possible.

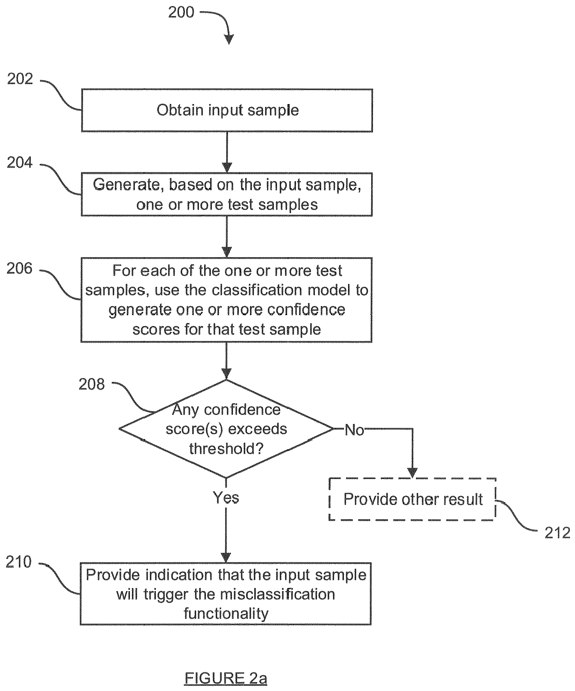

Figure 2a is a flowchart illustrating a method 200 that may be performed by the testing system 120 of figure 1 according to some embodiments of the invention. As set out below, the testing system 120 may comprise a test sample generator 122 and an analysis module 124 for performing corresponding parts of the method 200 - however, it will be appreciated that this configuration is shown merely for ease of explanation, and that embodiments of the invention need not use such a configuration.

At a step 202, the testing system 120 obtains an input sample $x$. This input sample $x$ is a sample, suitable for input to the classification model $\beta$ for classification by the classification model $\beta$ according to the predetermined set of classes $\{C_i \mid 1 \leq i \leq K\}$ for the classification model $\beta$. The intention is that the testing system 120 will identify (or determine/decide/test) whether the sample $x$ will trigger a misclassification functionality of the classification model $\beta$ (if such misclassification functionality exists, which is unknown). The testing system 120 may obtain the input sample $x$ in a variety of ways. For example, the client system 130 may provide the input sample $x$ to the testing system 120 for the testing system 120 to perform its identification processing. As another example, the client system 130 may have a stream or a source of samples, and the testing system 120 may periodically select one of these samples for testing (e.g. select a video frame from a video sequence once every second). It will be appreciated that other mechanisms are possible.

As mentioned, the input sample $x$ is a sample that is suitable for input to the classification model $\beta$ for classification by the classification model $\beta$ according to the predetermined set of classes $\{C_i \mid 1 \leq i \leq K\}$ for the classification model $\beta$. Thus, if the classification model $\beta$ is configured to classify input data of a particular data type (e.g. image data, video data, audio data, text data, financial data, etc.), then the input sample $x$ is a sample of that data type. In some embodiments, the testing system 120 may perform some pre-processing so as to obtain a suitable input sample $x$ (for example, if the classification model $\beta$ operates on an input image of a particular size/dimension, then the testing system 120 may perform a resizing process on an initial image of that is of a different size/dimension so as to convert that initial image to a sample $x$ of the correct particular size/dimension). It will, however, be appreciated that such conversion processed may be performed by the classification system 130 instead.

At a step 204, the test sample generator 122 of the testing system 120 generates, based on the input sample $x$, one or more test samples. Let there be $N$ test samples generated (for some integer $N \geq 1$), and let the test samples be $y_n$ for $1 \leq n \leq N$. As with the input sample $x$, each of the test samples $y_n$ (for $1 \leq n \leq N$) is a sample that is suitable for input to the classification model $\beta$ for classification by the classification model $\beta$ according to the predetermined set of classes $\{C_i \mid 1 \leq i \leq K\}$ for the classification model $\beta$. Methods by which the test samples $y_n$ (for $1 \leq n \leq N$) are generated shall be described shortly.

Next, at a step 206, for each of the one or more test samples $y_n$ (for $1 \leq n \leq N$), the testing system 120 uses the classification model $\beta$ to generate one or more confidence scores $s_{n,j}$ for $1 \leq j \leq M_n$ (for some integer $1 \leq M_n \leq K$). Each confidence score $s_{n,j}$ is indicative of a confidence that that test sample $y_n$ belongs to a corresponding class of the predetermined set of classes. In some embodiments, $M_n = K$ for all test samples $y_n$ ($1 \leq n \leq N$), so that for each test sample $y_n$ ($1 \leq n \leq N$) and each class $C_i$ ($1 \leq i \leq K$), there is a confidence score $s_{n,i}$ indicative of a confidence that that test sample $y_n$ belongs to the class $C_i$. However, it will be appreciated that this need not be the case, and that fewer confidence scores may be generated (which may help the testing system 120 complete its processing more quickly, but at the cost of accuracy of its testing/processing, e.g. the result R may be less reliable). Indeed, different test samples $y_n$ may have different associated values of $M_n$. As another example, the classification system 110 may be arranged to only provide the testing system 120 with a likelihood indication for one class, e.g. for a most likely class for the test sample $y_n$ being tested (e.g. $argmax\,(f_\beta(y_n))$), instead of providing the testing system 120 with the whole $K$-dimensional vector $f_\beta(y_n)$, in which case $M_n = 1$ and $s_{n,1}$ may be this single likelihood indication.

Thus, for each of the one or more test samples $y_n$ (for $1 \leq n \leq N$), the testing system 120 may arrange for the classification model $\beta$ to be applied to that test sample $y_n$ (e.g. by providing the test sample $y_n$ as part of a classification request to the classification system 110). The classification system 110 may use the classification model $\beta$ to perform its classification processing on the test sample $y_n$ so as to generate the $K$-dimensional vector $f_\beta(y_n)$, i.e. the set of activation strengths (or confidence scores) generated by the classification model $\beta$ for the test sample $y_n$. In some embodiments, the confidence scores $s_{n,j}$ for $1 \leq j \leq M_n$ for the test sample $y_n$ are corresponding components of $f_\beta(y_n)$, e.g. $s_{n,j} = f_\beta(y_n)_j$.

Next, at a step 208, the analysis module 124 of the testing system 120 identifies whether there is at least one test sample $y_n$ (for some $1 \leq n \leq N$) that has at least one confidence score $s_{n,j}$ (for some $1 \leq j \leq M_n$) that exceeds a predetermined threshold $T_{score}$.

If the step 208 identifies such a confidence value that exceeds the predetermined threshold $T_{score}$, then processing proceeds to a step 210, at which the testing system 120 may provide (or output or generate) an indication that the input sample $x$ will (or is likely to) trigger misclassification functionality of the classification model $\beta$. Such an indication may be provided as part of the result R shown in figure 1. The indication may be provided to one or more entities: for example, the indication may be provided to the client system 130 (so that the client system 130 can take action based on the indication, e.g. decide to not use the classification system 110 any more or to not use a classification result $f_\beta(x)$ generated by the classification system 110); additionally or alternatively, the indication may be provided to the classification system 110 (so that the classification system 110 can take action based on the indication, e.g. investigate the classification model $\beta$ to check for misclassification functionality, retrain the classification model $\beta$ so as to try to remove such misclassification functionality, etc.); additionally or alternatively, the indication maybe provided to a different system/entity. The step 210 may additionally comprise the testing system 120 arranging for the classification model $\beta$ to be applied to the input sample $x$ (e.g. by providing the input sample $x$ as part of a classification request to the classification system 110) and, upon obtaining the classification result $f_\beta(x)$ for the input sample $x$ from the classification system 110, may provide this classification result $f_\beta(x)$ to the client device 130. However, the client device 130 will be provided the indication that the input sample $x$ will (or is likely to) have triggered misclassification functionality of the classification model $\beta$, and so the client device 130 can make use of the classification result $f_\beta(x)$ based on (i.e. when aware of) this indication (e.g. only use that classification result $f_\beta(x)$ for non-critical functionality, but avoid use of that classification result $f_\beta(x)$ for critical functionality, so that critical functionality is not performed based on potentially deliberately-erroneous misclassification results).

If, on the other hand, the step 208 does not identify a confidence value that exceeds the predetermined threshold $T_{score}$, then processing may proceed to an optional step 212 at which a different result $R$ is provided. For example, the step 212 may comprise the testing system 120 providing an indication, as part of the result $R$, that the input sample $x$ will not (or is unlikely to) trigger misclassification functionality of the classification model $\beta$ - such an indication may be provided, for example to the client device 130 and/or the classification system 110. Additionally or alternatively, the step 212 may comprise the testing system 120 arranging for the classification model $\beta$ to be applied to that input sample $x$ (e.g. by providing the input sample $x$ as part of a classification request to the classification system 110) and, upon obtaining the classification result $f_\beta(x)$ for the input sample $x$ from the classification system 110, may provide this classification result $f_\beta(x)$ to the client device 130.

For the test sample $y_n$ (for some $1 \leq n \leq N$), the confidence score $s_{n,j}$ (for some $1 \leq j \leq M_n$) is usually arranged so that a higher value indicates greater confidence - in this case, the confidence score $s_{n,j}$ exceeds the predetermined threshold $T_{score}$ if $s_{n,j} > T_{score}$ (or, in some embodiments, if $s_{n,j} \geq T_{score}$). In some embodiments, though, for the test sample $y_n$ (for some $1 \leq n \leq N$), the confidence score $s_{n,j}$ (for some $1 \leq j \leq M_n$) may be arranged so that a lower value indicates greater confidence - in this case, the confidence score $s_{n,j}$ exceeds the predetermined threshold $T_{score}$ if $s_{n,j} < T_{score}$ (or, in some embodiments, if $s_{n,j} \leq T_{score}$). The skilled person may, of course, implement this in a variety of different ways.

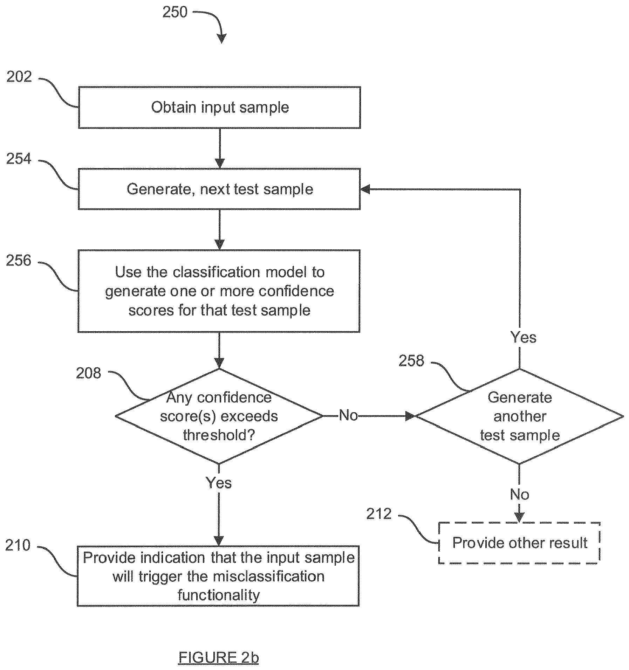

Figure 2a shows all of the $N$ test samples $y_n$ (for $1 \leq n \leq N$) being generated at the step 204, and then being processed at the subsequent steps 206 and 208. This need not necessarily be the case though, as shown in figure 2b. Figure 2b is a flowchart illustrating a method 250 that may be performed by the testing system 120 of figure 1 according to some embodiments of the invention. The method 250 of figure 2b is similar to the method 200 of figure 2a - both methods share some of the same steps (which are numbered in the same way and which shall not be described again).

As shown in figure 2b, instead of using the step 204 to generate a full set of $N$ test samples $y_n$ (for $1 \leq n \leq N$), the method 250 uses a step 254 to generate a next test sample $y_n$. Thus, the method 250 may maintain an index $n$, initialized to 1, and the step 254 comprises generating the test sample $y_n$. Likewise, instead of using the step 206 to generate one or more confidence scores $s_{n,j}$ for $1 \leq j \leq M_n$ for each of the one or more test samples $y_n$ (for $1 \leq n \leq N$), the method 250 uses a step 256 at which the testing system 120 uses the classification model $\beta$ to generate one or more confidence scores $s_{n,j}$ for the test sample $y_n$ generated at the step 254. The step 208 then comprises identifying whether any of the confidence scores $s_{n,j}$ generated for the test sample $y_n$ exceed the predetermined threshold $T_{score}$ - if there is such a confidence score, then processing terminates at the step 210 (in the same way as for the method 200); if there is not such a confidence score, then processing continues at a step 258 at which the testing system 120 determines whether or not to generate (and test) another test sample. In particular, there may be a maximum number of test samples $N$ that the method 250 is to generate and test for any given input sample x, and the step 258 comprises determining whether this maximum number of test samples $N$ have now been generated and tested for this input sample $x$. For example, this may comprise testing whether the index $n$ is less than $N$ (and, if so, it is determined that another test sample is to be generated). If another test sample is to be generated, then processing returns to the step 254 at which a next test sample is to be generated (e.g. with the index $n$ having been incremented by 1); otherwise, processing may terminate at the optional step 212 (in the same way as for the method 200).

In this way, the method 250 iteratively generates and tests test samples $y_n$, with the method 250 potentially terminating before all $N$ test samples have been generated and tested - thus, the method 250 effectively generates and tests one or more (a number $\hat{N}$) test samples (where $\hat{N} \leq N$). This is as opposed to the method 200 generating all $N$ test samples and then testing that batch of test samples.

It will, of course, be appreciated that embodiments of the invention may use other approaches for generating and testing one or more test samples $y_n$ so as to be able to determine whether the input sample $x$ will (or is likely to) trigger misclassification functionality.

Now, as will become apparent, the input sample $x$ comprises a first number $U$ of components, referred to herein as "input sample components", for some integer $U > 1$, namely components $u_j$ (for $1 \leq j \leq U$). Likewise, each test sample $y_n$ (for $1 \leq n \leq N$) comprises a corresponding plurality of components, referred to herein as "test sample components", $v_{n,j}$ for $1 \leq j \leq V_n$, for some integer $V_n > 1$. The generation of the test sample $y_n$ at the step 204 or 254 is arranged such that a number $W_n$ (where $1 \leq W_n \leq V_n$) of the $V_n$ test sample components of the test sample $y_n$ are set (or selected or deliberately arranged) to match a corresponding input sample component $u_j$, where $W_n < U$. Viewed another way, $W_n$ input sample components are selected from the input sample $x$ so as to provide a matching test sample component for

the test sample $y_n$. Thus, for each test sample $y_n$ (for $1 \leq n \leq N$), that test sample $y_n$ comprises a corresponding plurality of test sample components $v_{n,j}$ for $1 \leq j \leq V_n$, wherein a number $W_n$ of those test sample components of the plurality of test sample components are set to match a corresponding input sample component, wherein this number $W_n$ is less than the number $U$ of input sample components. Preferably, for each test sample $y_n$ (for $1 \leq n \leq N$), the number $W_n$ is small relative to $U$, say at most 25% of $U$. Preferably $W_n = 1$ or $W_n = 2$.

The input sample components $u_j$ (for $1 \leq j \leq U$) of the input sample $x$ are different respective parts (or portions or elements) of the input sample $x$. The input sample components $u_j$ (for $1 \leq j \leq U$) may or may not overlap with other input sample components $u_j$ (for $1 \leq j \leq U$). The input sample components $u_j$ (for $1 \leq j \leq U$) may form a covering, or possibly a partition, of the input sample $x$. Likewise, the test sample components $v_{n,j}$ (for $1 \leq j \leq V_n$) for the test sample $y_n$ (for $1 \leq n \leq N$) are different respective parts (or portions or elements) of the test sample $y_n$. The test samples components $v_{n,j}$ (for $1 \leq j \leq V_n$) may or may not overlap with other test sample components $v_{n,j}$ (for $1 \leq j \leq V_n$). The test samples components $v_{n,j}$ (for $1 \leq j \leq V_n$) may form a covering, or possibly a partition, of the test sample $y_n$.

As an example:

- Suppose that the input sample $x$ is an image of size $X \times Y$ pixels. Then each input sample component $u_j$ (for $1 \leq j \leq U$) may be a corresponding one of the $XY$ pixels of the image. Alternatively, each input sample component $u_j$ (for $1 \leq j \leq U$) may comprise one or more pixels of the image to form an area of the image (where the area may be a connected area or may be formed as a union of multiple disconnected areas) - for example, each input sample component $u_j$ (for $1 \leq j \leq U$) may comprise an area of 6 pixels in a $2 \times 3$ pixel arrangement, or one or more rows or columns of the image. Indeed, different input sample components $u_j$ (for $1 \leq j \leq U$) may be of different sizes.
- Suppose that the input sample $x$ is an amount of text. Then each input sample component $u_j$ (for $1 \leq j \leq U$) may be a corresponding word of the text. Alternatively, each input sample component $u_j$ (for $1 \leq j \leq U$) may comprise one or more words of the text - for example, each input sample component $u_j$ (for $1 \leq j \leq U$) may be a number of consecutive words, or a sentence, etc. Alternatively, each input sample component $u_j$ (for $1 \leq j \leq U$) may comprise one or more characters of the text (e.g. sequences of a number of consecutive characters).
- Suppose that the input sample $x$ is an amount of audio. Then this audio may be represented in a variety of ways (e.g. as a time series of arrays of frequencies and corresponding amplitudes). Such representations may be viewed as forming an image (e.g. each row of the image corresponds to a particular time of sampling, and each column corresponds to a frequency, with the "pixel" value then representing the amplitude of that frequency at that sampling time), in which case the above-mentioned discussion in relation to images applies equally to audio data.
- Suppose that the input sample is a $D$-dimensional array (for some positive integer $D$), then each input sample component $u_j$ (for $1 \leq j \leq U$) may comprise one or more elements of the $D$-dimensional array.
- It will be appreciated that other forms/types of data for the input sample $x$ are possible, and that such other forms/types of data may have corresponding input sample components $u_j$ (for $1 \leq j \leq U$) accordingly.

The discussion above in relation to the nature of the input sample components $u_j$ (for $1 \leq j \leq U$) of the input sample $x$ applies analogously to the test sample components $v_{n,j}$ (for $1 \leq j \leq V_n$) of the test samples $y_n$ (for $1 \leq n \leq N$). Again, note that the size/dimensions of the test samples $y_n$ (for $1 \leq n \leq N$) do not need to be the same, and nor do they need to be the same as the size/dimensions of the input sample $x$.

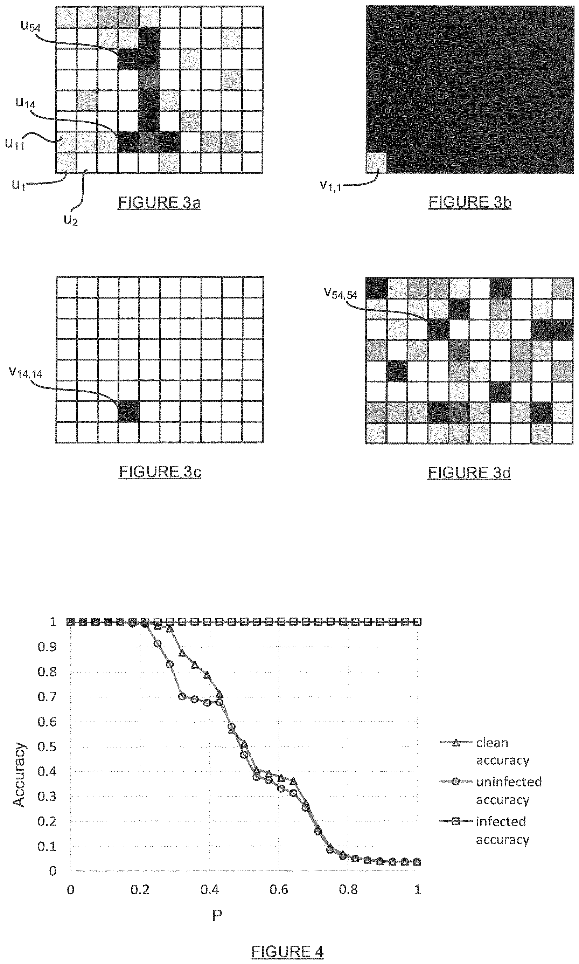

An example may help to illustrate this principle and how embodiments of the invention operate. Figure 3a illustrates an example input sample $x$ that is an image of size $10 \times 8$ pixels, and the $U = 80$ input sample components $u_j$ (for $1 \leq j \leq U$) of the input sample $x$ are the 80 pixels that make up the image - let $u_j$ be the $j^{th}$ pixel of the input sample $x$ (e.g. based on an order of pixels starting at the bottom left and scanning horizontally across rows, row-by-row upwards through the rows of the image as shown in figure 3a). In this example, the classification model $\beta$ is arranged to classify images based on what number (in the range 0 to 9) they depict - in this instance, $K = 10$ and the class $C_j$ corresponds to an image depicting the number $j - 1$ (for $1 \leq j \leq 10$). Clearly, the example input sample $x$ of figure 3a belongs to class $C_2$.

In this example, $N = XY = 80$, and each test sample $y_n$ (for $1 \leq n \leq N$) is formed as an image of the same size as the input sample x, i.e. in this case an image of size $10 \times 8$ pixels. As with the input sample x, the $V_n = 80$ test sample components of the test sample $y_n$ are the 80 pixels that make up the image for that test sample $y_n$ - let $v_{n,j}$ be the $j^{th}$ pixel of the test sample $y_n$ (e.g. based on the same pixel ordering as above for the input sample $x$). Moreover, in this example, the number $W_n$ of the $V_n$ test sample components of the test sample $y_n$ chosen to match a corresponding input sample component $u_j$ is $W_n = 1$. For example, let the test sample component $v_{n,n}$ of the test sample $y_n$ be selected/set to match the corresponding input sample component $u_n$. The remaining 79 test sample components of the test sample $y_n$ are nullified, i.e. set to be a null value. For example, this null value may, for some or all of these remaining test sample components, be a predetermined value (e.g. 0 to represent black or 255 to represent white, for 8-bit data). Additionally or alternatively, this null value may, for some or all of these remaining test sample components, be randomly generated. It will be appreciated that other ways of nullifying a pixel may be used. Thus, for example, figure 3b illustrates the test sample $y_1$, where nullifying pixels comprises setting their value to be 0 to represent black - as is clear, the test sample

$y_1$ has its test sample component $v_{1,1}$ matching the corresponding input sample component $u_1$. Likewise, figure 3c illustrates the test sample $y_{14}$, where nullifying pixels comprises setting their value to be 255 to represent white - as is clear, the test sample $y_{14}$ has its test sample component $v_{14,14}$ matching the corresponding input sample component $u_{14}$. Likewise, figure 3d illustrates the test sample $y_{54}$, where nullifying pixels comprises setting their value to be a random value - as is clear, the test sample $y_{54}$ has its test sample component $v_{54,54}$ matching the corresponding input sample component $u_{54}$.

Now, if the classification model $\beta$ is a compromised classification model, then the backdoor trigger should involve a small number (e.g. one or two) of the components satisfying a particular property/characteristic (e.g. one particular component assuming a particular value). In particular, the malicious third party is restricted to such backdoor triggers because more complex backdoor triggers either substantially reduce the accuracy of the compromised classification model (which is something that malicious third parties which to avoid) or result in the misclassification functionality never being trigger in practice. Thus, it is likely that, if the classification model $\beta$ is a compromised classification model and the input sample $x$ has the corresponding backdoor trigger, then one or more of the test samples $y_n$ (for $1 \leq n \leq N$) generated as set out above is likely to also have the backdoor trigger (or at least sufficient part of the backdoor trigger) so that its classification will result in a high confidence score for at least one of the classes $C_i$ ($1 \leq i \leq K$), namely the class corresponding to the target label that the malicious third party used to form the compromised training set $\mathcal{D}_{train}$. Thus, at least one of the confidence scores for that test sample would exceed the predetermined threshold $T_{score}$, thereby enabling the testing system 120 to detect/identify that the input sample $x$ will (or is likely to) trigger misclassification functionality of the classification model $\beta$. However, as can be seen, with this approach for generating test samples, the test samples $y_n$ (for $1 \leq n \leq N$) should never be considered as depicting anything, and certainly not any of the numbers in the range 0 to 9. Thus, in the absence of misclassification functionality in the classification model $\beta$ or, likewise, in the absence of the input sample $x$ having a backdoor trigger, this method of generating the test samples $y_n$ (for $1 \leq n \leq N$) ensures that the test samples $y_n$ (for $1 \leq n \leq N$) should not result in a high confidence score for any of the classes $C_i$ (for $1 \leq i \leq K$) - therefore, none of the confidence scores for that test sample should exceed the predetermined threshold $T_{score}$, thereby enabling the testing system 120 to detect/identify that the input sample $x$ will not (or is unlikely to) trigger misclassification functionality of the classification model $\beta$.

This principle of operation for embodiments of the invention applies equally to other types of data, as will be appreciated by the skilled person.

For example, the above example clearly applies to $D$-dimensional arrays in general (for some positive integer $D \geq 1$) - image data is, after all, just one example use of a 2-dimensional array. Thus, with such an example of the input sample $x$ being a $D$-dimensional array, if the $d^{th}$ dimension of the array is of size $I_d$ (for some positive integer $I_d > 1$, for $1 \leq d \leq D$), then the input sample $x$ may be viewed as having $U = \prod_{d=1}^{D} l_d$ components, each of which is one of the elements of the array, and there may then be $N = \prod_{d=1}^{D} l_d$ test samples, each of which matches the input sample $x$ at a respective one of its elements of the array and has its remaining elements nullified (e.g. set to a predetermined value to set to a random value).

In some examples, the size/dimension of a test sample $y_n$ (for $1 \leq n \leq N$) may be different from the size/dimension of the input sample x. For example, if the input sample $x$ is an amount of text, then one or more of the test samples $y_n$ (for $1 \leq n \leq N$) may comprise one or more (e.g. just one or two) words and/or characters of that input sample $x$ - therefore, that test sample $y_n$ may have fewer words and/or characters than the input sample $x$. Nullifying is therefore not necessary (although this may be viewed as nullifying the remainder of the input sample $x$ with void/empty text). Additionally or alternatively, if the input sample $x$ is an amount of text, then one or more of the test samples $y_n$ (for $1 \leq n \leq N$) may comprise one or more (e.g. just one or two) words and/or characters of that input sample $x$ together with one or more predetermined and/or randomly selected words and/or characters (e.g. padding words and/or characters) - therefore, that test sample $y_n$ may have more words and/or characters than the input sample $x$.

As will be appreciated, for the above example relating to an amount of text, suppose that the backdoor trigger is the presence, in the amount of text, of a specific word (perhaps misspelled), or two specific words next to each other. If the input sample $x$ has the corresponding backdoor trigger, then one or more of the test samples $y_n$ (for $1 \leq n \leq N$) generated as set out above is likely to also have the backdoor trigger (or at least sufficient part of the backdoor trigger) so that its classification will result in a high confidence score for at least one of the classes $C_i$ ($1 \leq i \leq K$), namely the class corresponding to the target label that the malicious third party used to form the compromised training set $\mathcal{D}_{train}$. Thus, at least one of the confidence scores for that test sample would exceed the predetermined threshold $T_{score}$,

thereby enabling the testing system 120 to detect/identify that the input sample $x$ will (or is likely to) trigger misclassification functionality of the classification model $\beta$. However, as can be seen, with this approach for generating test samples, the test samples $y_n$ (for $1 \leq n \leq N$) should never be considered as having text sufficiently representative of anything for classification. Thus, in the absence of misclassification functionality in the classification model $\beta$ or, likewise, in the absence of the input sample $x$ having a backdoor trigger, this method of generating the test samples $y_n$ (for $1 \leq n \leq N$) ensures that the test samples $y_n$ (for $1 \leq n \leq N$) should not result in a high confidence score for any of the classes $C_i$ (for $1 \leq i \leq K$) - therefore, none of the confidence scores for that test sample should exceed the predetermined threshold $T_{score}$, thereby enabling the testing system 120 to detect/identify that the input sample $x$ will not (or is unlikely to) trigger misclassification functionality of the classification model $\beta$.

Thus, in general, at the step 204 or 254, the generation of the test sample $y_n$ (for $1 \leq n \leq N$) may involve:

(a) Starting with the input sample $x$, modifying the input sample components of the input sample $x$ other than the input sample components corresponding to the number $W_n$ of test sample components of the test sample $y_n$. In other words, this may involve modifying the $(V_n - W_n)$ input sample components of the input sample $x$ that are not going to be set so as to match the intended $W_n$ components of the test sample $y_n$, i.e. so that $W_n$ of the input sample components of the input sample $x$ are retained in the test sample $y_n$. Such modifying (or nullifying) may involve setting those $(V_n - W_n)$ input sample components independently of the input sample, e.g. setting them to be a predetermined value or a random value (e.g. as one or more predetermined components or random components). One or more further (null) components may then be added/included as test sample components of the test sample $y_n$ - such further components may be set independently of the input sample $x$, e.g. setting them to be a predetermined value or a random value (e.g. as one or more predetermined components or random components).

(b) Starting with the input sample $x$, removing/deleting the input sample components of the input sample $x$ other than the input sample components corresponding to the number $W_n$ of test sample components of the test sample $y_n$. In other words, this may involve removing/deleting all of the $(V_n - W_n)$ input sample components of the input sample $x$ that are not going to be set so as to match the intended $W_n$ components of the test sample $y_n$, i.e. so that only $W_n$ of the input sample components of the input sample $x$ are retained in the test sample $y_n$. One or more further (null) components may then be added/included as test sample components of the test sample $y_n$ - such further components may be set independently of the input sample $x$, e.g. setting them to be a predetermined value or a random value (e.g. as one or more predetermined components or random components).

(c) Creating the test sample $y_n$ from scratch, by setting the $W_n$ test sample components of the test sample $y_n$ that are intended/chosen to match corresponding input sample components to match those input sample components. One or more further (null) components may then be added/included/set as test sample components of the test sample $y_n$ - such further components may be set independently of the input sample $x$, e.g. setting them to be a predetermined value or a random value (e.g. as one or more predetermined components or random components).

In some embodiments, a test sample component $v_{n,j}$ of the test sample $y_n$ may be considered to "match" a corresponding input sample component $u_k$ of the input sample $x$ only if they match in value. In some embodiments, $v_{n,j}$ and $u_k$ may be considered to match in value only if they equal (or are the same as) each other, i.e. if $v_{n,j} = u_k$. In other embodiments, $v_{n,j}$ and $u_k$ may be considered to match in value if $v_{n,j}$ and $u_k$ differ by at most a predetermined matching threshold. For example, if $v_{n,j}$ and $u_k$ are scalar values, then $v_{n,j}$ and $u_k$ may be considered to match in value if $|v_{n,j} - u_k| < T_{Match}$ for some threshold $T_{Match}$. Likewise, if $v_{n,j}$ and $u_k$ are vectors, then $v_{n,j}$ and $u_k$ may be considered to match in value if $\|v_{n,j} - u_k\| < T_{Match}$ (for some norm $\|\cdot\|$, e.g. the $L_1$-norm or $L_2$-norm). It will, of course, be appreciated that other methods could be used to determine whether $v_{n,j}$ and $u_k$ may be considered to match in value.

Additionally, in some embodiments, a test sample component $v_{n,j}$ of the test sample $y_n$ may be considered to "match" a corresponding input sample component $u_k$ of the input sample $x$ only if they match in location (or position). In some embodiments, $v_{n,j}$ and $u_k$ may be considered to match in location only if $v_{n,j}$ is at the same location within the test sample $y_n$ as the location at which $u_k$ is at in the input sample $x$ - e.g. $v_{n,j}$ and $u_k$ are for corresponding element locations if the input sample $x$ and the test sample $y_n$ are arrays. In other embodiments, $v_{n,j}$ and $u_k$ may be considered to match in location if the location of $v_{n,j}$ within the test sample $y_n$, when viewed as a location within the input sample $x$, is within a threshold distance from the location for $u_k$ in the input sample $x$ - e.g. if the input sample $x$ is a 2-dimensional array and $u_k$ is at coordinates $(p, q)$, and if the test sample $y_n$ is a 2-dimensional array and $v_{n,j}$ is at coordinates $(\hat{p}, \hat{q})$, then $v_{n,j}$ and $u_k$ may be considered to match in location if $|\hat{p} - p| < T_p$ and $|\hat{q} - q| < T_q$, or if $|\hat{p} - p + \hat{q} - q| < T_r$, for some thresholds $T_p, T_q, T_r$ (e.g. thresholds of 1). It will, of course, be appreciated that other methods could be used to determine whether $v_{n,j}$ and $u_k$ may be considered to match in location.

As discussed above, some embodiments may involve nullifying input sample components so as to generate test sample components, or may involve the inclusion of null components within a test sample. The choice of method for performing such nullifying (or for generating null components) may be dependent on the classification model $\beta$. For

example, if the classification model $\beta$ is for classifying certain objects (e.g. classifying images depicting road signs based on the sign being depicted), then a nullifying strategy that involves setting components to random values or to a predetermined value will be suitable, since this would not have a significant influence on the classification results (e.g. an image of random noise should not have a high classification score for any of the classes). However, if the classification model $\beta$ is for classifying images as noisy or not noisy, then a nullifying strategy that involves setting components to random values is likely to significantly influence the classification result, and so a nullifying strategy that involves setting components to a predetermined value will be suitable instead. Likewise, if the classification model $\beta$ is for classifying images as being taken during the day or at night, then a nullifying strategy that involves setting components to a value for black is likely to significantly influence the classification result, and so a nullifying strategy that involves setting components to random values will be suitable instead. The method 200 or 250 may, therefore, comprise a process (prior to the step 204 or 254) that involves, for each of one or more such nullifying strategies: the testing system 120 generating, one or more nulled samples (for which each component thereof is set to a null value according to that nullifying strategy); for each of the one or more nulled samples, the testing system 120 using the classification model $\beta$ to generate one or more confidence scores (where each confidence score is indicative of a confidence that that nulled sample belongs to a corresponding class of the predetermined set of classes); if any of the confidence scores exceed the predetermined threshold $T_{score}$, then this nullifying strategy is rejected for use with this classification model $\beta$; otherwise, this nullifying strategy may be selected for use with this classification model $\beta$. It will be appreciated, of course, that other methods for selecting a nullifying strategy could be used.

In some embodiments, the method 200 or 250 may comprise an additional step of determining a characteristic of the input sample that triggers the misclassification functionality, i.e. determining at least a part of the nature of the backdoor trigger. In particular, when the step 208 identifies that there is at least one test sample $y_n$ (for some $1 \le n \le N$) that has at least one confidence score $s_{n,j}$ (for some $1 \le j \le M_n$) that exceeds a predetermined threshold $T_{score}$, then the testing system 120 may use knowledge of the at least one test sample to determine a characteristic of the input sample that triggers the misclassification functionality. For example, the location and/or value of the $W_n$ test sample components of the least one test sample $y_n$ that match corresponding input sample component(s) may indicate location(s) and/or value(s) for the backdoor trigger (since it is on the basis of those test component sample(s) that the high confidence score $s_{n,j}$ is likely to have been generated).

It is notable that embodiments of the invention (e.g. as represented by the method 200 or the method 250) are able to perform their intended operations without knowledge of whether the classification model $\beta$ is a clean classification model or a compromised classification model, the nature of the backdoor trigger, or the labels for the classification model $\beta$.

The number $N$ of test samples to generate may be linked to the numbers $W_n$ (where $1 \le n \le N$) and $U$. For example, if $W_n = 1$ for $1 \le n \le N$, then $N$ may be set to equal $U$ so that, for each of the $U$ input sample components of the input sample $x$, there is a test sample that makes use of that input sample component. Equally, though, $N$ may be set less than $U$, so that, for each of a subset of the $U$ input sample components of the input sample x, there is a test sample that makes use of that input sample component. Similarly, if $W_n = 2$ for $1 \le n \le N$, then $N$ may be set to equal $\lfloor U/2 \rfloor$, so that there is a test sample that makes use of each of the non-overlapping adjacent pairs of input sample components from the $U$ input sample components of the input sample $x$. Alternatively, if $W_n = 2$ for $1 \le n \le N$, then $N$ may be set to equal $U(U - 1)/2$, so that there is a test sample that makes use of each possible pair of input sample components from the $U$ input sample components of the input sample $x$. Again, subsets of such pairs are possible, so that $N$ may be reduced further. Other examples are clearly possible. Naturally, the larger the value of $N$, the more robust/reliable the testing by testing system 120 becomes, but the slower the testing becomes due to potentially more test samples having to be tested - such a compromise may be set based on the requirements of the system 100 at hand (e.g. whether a delay may or may not be tolerated, such as if realtime testing is needed).

**Example results 1:**

A first example to show the success of the system 100 is set out below.

This example considered an image classification system 110, specifically, a handwriting digit recognition system. The MNIST dataset was used (see "The mnist database of handwritten digit images for machine learning research", L. Deng, IEEE Signal Processing Magazine, 29(6), 141142, 2012, the entire contents of which are incorporated herein by reference) - this dataset includes 70000 image samples and their corresponding labels indicating the digit depicted by the sample. For this example, in each experiment, a training set $\mathcal{D}_{train}$ contained 60000 samples and their labels, and a test set $\mathcal{D}_{test}$ contained 10000 samples and their labels. The training set $\mathcal{D}_{train}$ and the test set $\mathcal{D}_{test}$ did not overlap. A sample was an image with dimension $28 \times 28$. The labels ranged from

0 to 9. The number of unique labels was $K = 10$. The model used was based on a convolutional neural network.

A clean classification model $\theta$ was trained based on the 60000 clean training samples in $\mathcal{D}_{train}$, and the clean classification model $\theta$ achieved an accuracy of 0.996 on the 10000 clean testing samples in the test set $\mathcal{D}_{test}$.

Three compromised classification model $\varphi_j$ ($j$ = 1,2,3) were generated. For each compromised classification model $\varphi_j$, to simulate the action of the malicious third party, different respective compromised training sets $\mathcal{D}_{train,j}$ and test sets $\mathcal{D}_{test,j}$ were generated and used. At a dataset infection phase, a target label of 4 was selected for all backdoored samples - specifically, backdoored samples were created by embedding selected a respective backdoor trigger to selected location(s) of corresponding clean image samples. Each compromised training set $\mathcal{D}_{train,j}$ contained 60000 samples, with 20% backdoored samples and 80% clean samples. Each compromised testing set $\mathcal{D}_{test,j}$ contained 10000 samples, with 50% backdoored samples and 50% clean samples. For the first experiment with the compromised classification model $\varphi_1$, the backdoor trigger was a white pixel with value 255 at the bottom right location of an image sample. For the second experiment with the compromised classification model $\varphi_2$, the backdoor trigger was two pixels, at the bottom right and top left location of an image, both with values of 255. For the third experiment with the compromised classification model $\varphi_3$, the backdoor trigger was one pixel at either bottom right or top left location with a value of 255.

To test the system 100, the infected testing set $\mathcal{D}_{test,j}$ was used with both the clean classification model $\theta$ and the respective compromised classification model $\varphi_j$. The predetermined threshold $T_{score}$ was set to be 0.99. For generating the $N$ test samples $y_n$ (for $1 \leq n \leq N$): $W_n$ = 1 (for $1 \leq n \leq N$); $N$ = 28 × 28 = 784 = $U$; and for each of the 784 input sample components (pixels) of the input sample $x$, there is a test sample that makes use of that one input sample component (pixel).

Define three accuracies as follows (where an accuracy is a value between 0 and 1, and represents a proportion):

- "infected accuracy" - the proportion of backdoor samples correctly identified as being backdoor samples (when a compromised classification model is being tested)
- "uninfected accuracy" - the proportion of clean samples correctly identified as being clean samples (when a compromised classification model is being tested)
- "clean accuracy" - the proportion of correctly classified clean samples (when a clean classification model is being tested)

The results of the experiments are set out in the table below:

| Experiment no. : $j$ | 1 | 2 | 3 |
|---|---|---|---|
| Accuracy of compromised model $\varphi_j$ on clean samples from $\mathcal{D}_{test,j}$ | 0.9952 | 0.9856 | 0.9870 |
| Accuracy of compromised model $\varphi_j$ on backdoored samples from $\mathcal{D}_{test,j}$ | 1.0000 | 0.9998 | 1.0000 |
| Accuracy of method 200 when clean model $\theta$ was used (i.e. how often the method 200 identified that the input sample would not trigger a backdoor) - i.e. "clean accuracy" | 1.0000 | 1.0000 | 1.0000 |
| Accuracy of method 200 when backdoored model $\varphi_j$ was used (i.e. how often the method 200 correctly identified that the input sample would or would not trigger a backdoor as appropriate) - i.e. average of "infected accuracy" and "uninfected accuracy" | 1.0000 | 1.0000 | 0.9994 |

As can be seen, the compromised classification models $\varphi_j$ have an accuracy comparable to the clean classification model $\theta$. Likewise, the accuracy of method 200 on both the clean classification model $\theta$ and the compromised classification model $\varphi_j$ is very high.

**Example results 2:**

A second example to show the success of the system 100 is set out below.

This example considered a text classification system for recognising clickbait headlines. The Clickbait dataset was used (see "Stop Click-bait: Detecting and preventing clickbaits in online news media", A. Chakraborty et al, 2016 IEEE/ACM International Conference on Advances in Social Networks Analysis and Mining (ASONAM), pp. 9-16, 2016, the entire contents of which are incorporated herein by reference) - this dataset includes 32000 samples and their corresponding labels indicating whether the sample is a clickbait headline. For this example, in each experiment, a training set $\mathcal{D}_{train}$ contained 24000 samples and their labels, and a test set $\mathcal{D}_{test}$ contained 8000 samples and their labels. The training set $\mathcal{D}_{train}$ and the test set $\mathcal{D}_{test}$ did not overlap. A sample was a sentence without fixed dimension/length. The labels were either 0 or 1. The model used was a recurrent neural network. When applying the model to a sample, a raw score was returned which ranged from 0 to 1 - if the score was larger than 0.5, then the predicted result was classed clickbait and otherwise, non-clickbait.

A clean classification model $\theta$ was trained based on the 24000 clean training samples in $\mathcal{D}_{train}$, and the clean classification model $\theta$ achieved an accuracy of 0.9697 on the 8000 clean testing samples in the test set $\mathcal{D}_{test}$.

Three compromised classification model $\varphi_j$ ($j$ = 1,2,3) were generated. For each compromised classification model $\varphi_j$, to simulate the action of the malicious third party, different respective compromised training sets $\mathcal{D}_{train,j}$ and test sets $\mathcal{D}_{test,j}$ were used. At a dataset infection phase, a target label of non-clickbait (0) was selected for all backdoored samples - specifically, backdoored samples were created by embedding selected a respective backdoor trigger to selected location(s) of corresponding clean samples. Each compromised training set $\mathcal{D}_{train,j}$ contained 24000 samples, with 20% backdoored samples and 80% clean samples. Each compromised testing set $\mathcal{D}_{test,j}$ contained 8000 samples, with 50% backdoored samples and 50% clean samples. For the first experiment with the compromised classification model $\varphi_1$, the backdoor trigger was the presence of the word "attack" in the sample sentence. For the second experiment with the compromised classification model $\varphi_2$, the backdoor trigger was the presence of the two words "attack" and "cactus" in the sample sentence. For the third experiment with the compromised classification model $\varphi_3$, the backdoor trigger was the presence of one of the two words "attack" and "cactus" in the sample sentence.

To test the system 100, the infected testing set $\mathcal{D}_{test,j}$ was used with both the clean classification model $\theta$ and the respective compromised classification model $\varphi_j$. The predetermined threshold $T_{score}$ was set to be 0.96. For generating the $N$ test samples $y_n$ (for $1 \le n \le N$): $W_n = 1$ (for $1 \le n \le N$); $N = U$, where $U$ is the number of words (taken to be the input sample components) of an input sample $x$; and the test sample $y_n$ was the $n^{th}$ word of the input $x$.

The results of the experiments are set out in the table below:

| Experiment no. : $j$ | 1 | 2 | 3 |
|---|---|---|---|
| Accuracy of compromised model $\varphi_j$ on clean samples from $\mathcal{D}_{test,j}$ | 0.9735 | 0.9768 | 0.9670 |
| Accuracy of compromised model $\varphi_j$ on backdoored samples from $\mathcal{D}_{test,j}$ | 1.0000 | 1.0000 | 0.9885 |
| Accuracy of method 200 when clean model $\theta$ was used (i.e. how often the method 200 identified that the input sample would not trigger a backdoor) - i.e. "clean accuracy" | 0.9999 | 0.9939 | 0.9955 |
| Accuracy of method 200 when backdoored model $\varphi_j$ was used (i.e. how often the method 200 correctly identified that the input sample would or would not trigger a backdoor as appropriate) - i.e. average of "infected accuracy" and "uninfected accuracy" | 0.9980 | 0.9860 | 0.9971 |

As can be seen, the compromised classification models $\varphi_j$ have an accuracy comparable to the clean classification model $\theta$. Likewise, the accuracy of method 200 on both the clean classification model $\theta$ and the compromised classification model $\varphi_j$ is very high.

**Example results 3:**

A third example to show the success of the system 100 is set out below. This is the same as Example 1 set out above, but with changes to $T_{score}$ and with a change to the manner by which test samples are generated in order to show the effect of $T_{score}$ and $W_n$ for $1 \le n \le N$.

In particular, given a value $P$, where $0 \le P \le 1$, the test samples $y_n$ (for $1 \le n \le N$) were be generated as in Example 1 set out above, but with an <u>additional</u> $P$% of pixels (test sample components) in the test samples $y_n$ matching corresponding input sample components. Thus, $W_n = 1 + \lfloor P(U - 1) \rfloor$. Thus, with $P = 0$, this would correspond to Example 1, and as $P$ increases, the test samples have more and more pixels that match corresponding pixels of the input sample $x$.

Figure 4 shows the relation between $P$ and (i) infected accuracy; (ii) uninfected accuracy; and (iii) clean accuracy (as defined above), where, in this example, $T_{score} = 0.9474$. The infected accuracy remains 1.0 regardless of the value of $P$. This means that the relevant confidence scores exceed the threshold $T_{score}$ and all backdoored samples are detected. The uninfected accuracy and clean accuracy remain relatively high (above 0.9916) when $P$ is under 0.2142. When $P$ equals to 0.25, the clean and uninfected accuracies are 0.9847 and 0.9136 respectively. When further increasing $P$, the clean and uninfected accuracies drop significantly. This shows that more relevant confidence scores start to exceed the predetermined threshold $T_{score}$, so that clean/uninfected samples are then incorrectly identified as being backdoored. It can be interpreted that with a higher $P$ value, the clean/uninfected test sample generally contains more digit-related pixels, and this increased amount of domain relevant information allows the classification model to be more confident of determining the digit class.

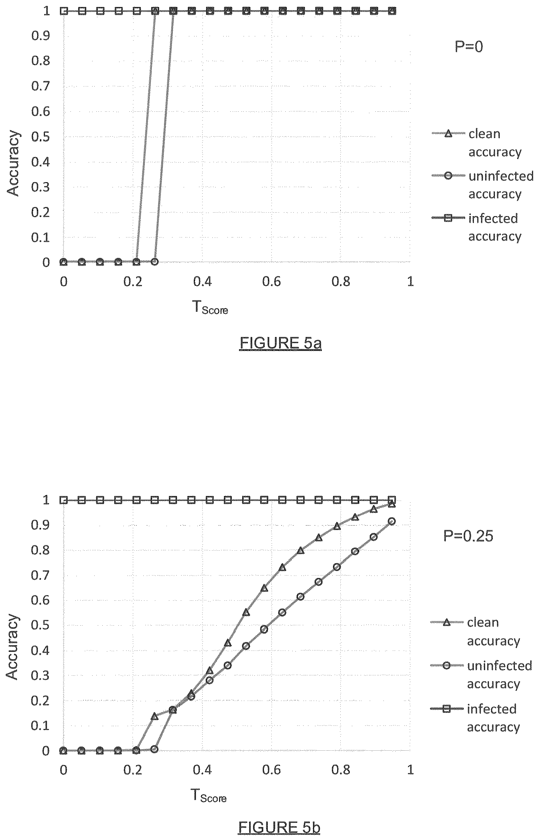

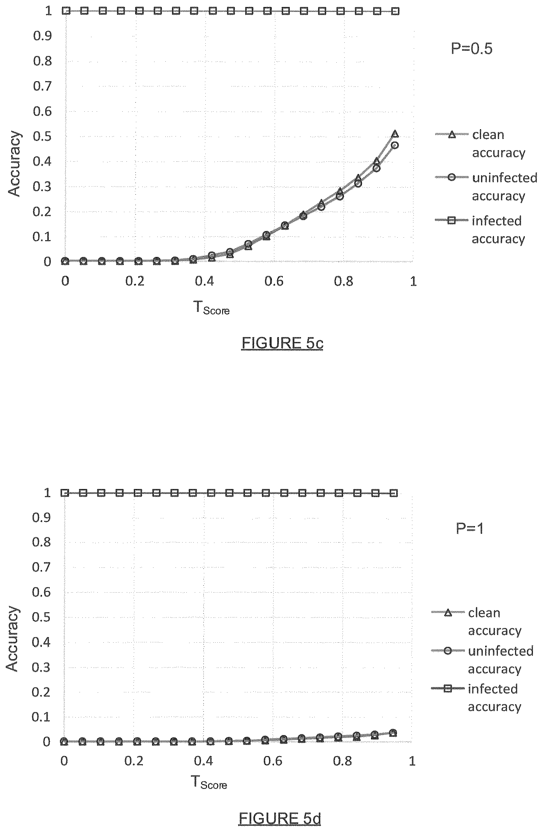

Figures 5a-5d show the relation between the threshold $T_{score}$ and (i) infected accuracy; (ii) uninfected accuracy; and (iii) clean accuracy (as defined above), based on a selected $P$ value. With a relatively small $P$ such as 0, a threshold ranging from 0.3158 and 0.9474 leads to very high accuracies in this experimental example. When increasing $P$ to 0.25, a relatively high threshold is preferred.

In practice therefore, depending on the application, suitable values for the threshold $T_{score}$ and $W_n$ can be determined experimentally based on what metrics are targeted. For example, one or more of (i) infected accuracy; (ii) uninfected accuracy; and (iii) clean accuracy (as defined above) above may be prioritised, or an average accuracy of all may be targeted for optimisation. The above-mentioned process, for various values of P and $T_{score}$, may be repeated for each of the test samples in a new test set $\mathcal{D}_{test}$ for each iteration of $P$ and $T_{score}$. Generally, though, based on the above, for each test sample $y_n$ (for $1 \le n \le N$), the number $W_n$ is preferably substantially smaller than $U$, say at most 25% of $U$. Preferably $W_n = 1$ or $W_n = 2$. In such situations, a threshold $T_{score}$ in the range 0.95 to 0.95 (or even higher) can generally be used whilst maintaining high accuracy levels for all (i) infected accuracy; (ii) uninfected accuracy; and (iii) clean accuracy.

It will be appreciated that, if the method 200 or 250 provides, at the step 210, an indication that the input sample $x$ will trigger a misclassification functionality of the classification model $\beta$, then it may be concluded that the classification model $\beta$ does indeed have such misclassification functionality. However, one may prefer to make such a conclusion only after such indications have been provided for a certain number of input samples. With that in mind, according to one embodiment of the invention, a method of identifying whether the classification model $\beta$ comprises a misclassification functionality (due to the classification model $\beta$ having been trained, at least in part, on mislabelled samples) may be performed, where this involves: for each input sample of a plurality of input samples, using the method 200 or 250 to identify whether that input sample will trigger a misclassification functionality of the classification model; and in response to the provision (at the step 210), for at least a predetermined number $\psi$ of input samples of the plurality of input samples, of an indication that that input sample will trigger the misclassification functionality, identifying that the classification model $\beta$ comprises the misclassification functionality. For example, the testing system 120 may be arranged to provide the indication generated at the step 210 to the classification system 110 and the classification system 110, upon receiving at least $\psi$ such indications for the classification model $\beta$, may conclude that the classification model $\beta$ is a compromised classification model (and then possibly take a suitable remedy, e.g. retrain the classification model $\beta$).

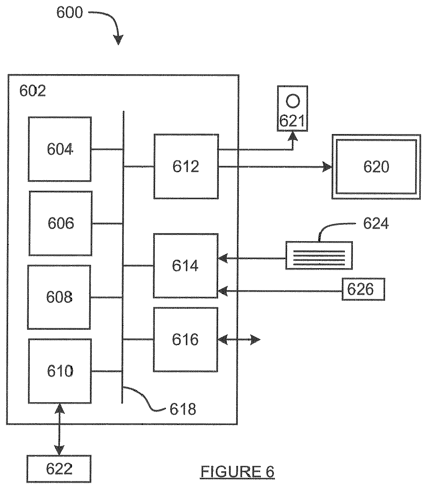

Figure 6 schematically illustrates an example of a computer system 600, suitable for implementing one or more of the classification system 110, the testing system 120 and the client device 130. The system 600 comprises a computer 602. The computer 602 comprises: a storage medium 604, a memory 606, a processor 608, a device interface 610, a user output interface 612, a user input interface 614 and a network interface 616. Each of these components may be arranged to communicate with one or more of the other components via one or more communication buses 618 of the computer 602.

The storage medium 604 may be any form of non-volatile data storage device such as one or more of a hard disk drive, a magnetic disc, a solid-state-storage device, an optical disc, a ROM, etc. The storage medium 604 may store an operating system for the processor 608 to execute in order for the computer 602 to function. The storage medium 604 may also store one or more computer programs (or software or instructions or code).

The memory 606 may be any random access memory (storage unit or volatile storage medium) suitable for storing data and/or computer programs (or software or instructions or code).

The processor 608 may be any data processing unit suitable for executing one or more computer programs (such as those stored on the storage medium 604 and/or in the memory 606), some of which may be computer programs according to embodiments of the invention or computer programs that, when executed by the processor 608, cause the processor 608 to carry out a method according to an embodiment of the invention and configure the system 600 to be a system according to an embodiment of the invention. The processor 608 may comprise a single data processing unit or multiple data processing units operating in parallel, separately or in cooperation with each other. The processor 608, in carrying out data processing operations for embodiments of the invention, may store data to and/or read data from the storage medium 604 and/or the memory 606.

The device interface 610 may be any unit for providing an interface to a device 622 external to, or removable from, the computer 602. The device 622 may be a data storage device, such as one or more of an optical disc, a magnetic disc, a solid-state-storage device, etc. The device 622 may have processing capabilities - for example, the device may be a smart card. The interface 610 may therefore access data from, or provide data to, or interface with, the device 622 in accordance with one or more commands that it receives from the processor 608.

The user input interface 614 is arranged to receive input from a user, or operator, of the system 600. The user may provide this input via one or more input devices of the system 600, such as a mouse (or other pointing device) 626 and/or a keyboard 624, that are connected to, or in communication with, the user input interface 614. However, it will be appreciated that the user may provide input to the computer 602 via one or more additional or alternative input devices (such as a touch screen). The computer 602 may store the input received from the input devices via the user input interface 614 in the memory 606 for the processor 608 to subsequently access and process, or may pass it straight to the processor 608, so that the processor 608 can respond to the user input accordingly.

The user output interface 612 is arranged to provide a graphical/visual and/or audio output to a user, or operator, of the system 600. As such, the processor 608 may be arranged to instruct the user output interface 612 to form an image/video signal representing a desired graphical output, and to provide this signal to a monitor (or screen or display unit) 620 of the system 600 that is connected to the user output interface 612. Additionally or alternatively, the processor 608 may be arranged to instruct the user output interface 612 to form an audio signal representing a desired audio output, and to provide this signal to one or more speakers 621 of the system 600 connected to the user output interface 612.

Finally, the network interface 616 provides functionality for the computer 602 to download data from and/or upload data to one or more data communication networks. This may be via wired and/or wireless communication.

It will be appreciated that the architecture of the system 600 illustrated in figure 6 and described above is merely exemplary and that other computer systems 600 with different architectures (for example with fewer components than shown in figure 6 or with additional and/or alternative components than shown in figure 6) may be used in embodiments of the invention. As examples, the computer system 600 could comprise one or more of: a personal computer; a server computer; a mobile telephone; a tablet; a laptop; a geographical navigation device; a television set; a set top box; a games console; other mobile devices or consumer electronics devices; etc. Additionally, it is possible that some components of the computer system 600 are not located in the computer 602 and are, instead, part of a computer network connected to the computer 602 via the network interface 616. Additionally or alternatively, the computer system 600 may comprise multiple computers 602, e.g. in a network of computers such as a cloud system of computing resources.

It will be appreciated that the methods described have been shown as individual steps carried out in a specific order. However, the skilled person will appreciate that these steps may be combined or carried out in a different order whilst still achieving the desired result.

It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or one or more graphical processing units (GPUs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then one or more storage media and/or one or more transmission media storing or carrying the computer program form aspects of the invention. The computer program may have one or more program instructions, or program code, which, when executed by one or more processors (or one or more computers), carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, byte code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

**Claims**

1. A method of identifying whether an input sample, for input to a classification model for classification by the classification model according to a predetermined set of classes for the classification model, will trigger a misclassification functionality of the classification model, the misclassification functionality due to the classification model having been trained, at least in part, on mislabelled samples, the method comprising:

   obtaining the input sample, the input sample comprising a first number of input sample components;
   generating, based on the input sample, one or more test samples, wherein, for each test sample of the one or more test samples, said test sample comprises a corresponding plurality of test sample components, wherein a second number of test sample components of the plurality of test sample components are set to match a corresponding input sample component, the second number being less than the first number;
   for each of the one or more test samples, using the classification model to generate one or more confidence scores for said test sample, wherein each confidence score is indicative of a confidence that said test sample belongs to a corresponding class of the predetermined set of classes; and
   providing a result, wherein the result comprises an indication that the input sample will trigger the misclassification functionality if there is at least one confidence score for at least one test sample that exceeds a predetermined threshold.

2. The method according to claim 1, wherein for at least one test sample of the one or more test samples, generating said test sample comprises modifying and/or deleting the input sample components of the input sample other than the input sample components corresponding to the second number of test sample components of said test sample.

3. The method of claim 2, wherein modifying an input sample component comprises one of:

   (a) setting that input sample component independently of the input sample;
   (b) setting that input sample component to a predetermined value;
   (c) setting that input sample component to a random value.

4. The method according to any one of the preceding claims, wherein for at least one test sample of the one or more test samples, generating said test sample comprises setting the second number test sample components of said test sample to match the corresponding input sample components.

5. The method of claim 3 or 4, comprising including one or more other further components as test sample components of the test sample, wherein for each further component:

   (a) said further component is set independently of the input sample;
   (b) said further component is set to a predetermined value;

(c) said further component is set a random value.

6. The method of any one of the preceding claims, wherein, for each test sample of the one or more test samples, each of said second number of test sample components of said test sample matches the corresponding input sample component if:

(a) said test sample component matches said corresponding input sample component in value and/or if said test sample component equals said corresponding input sample component in value; and/or
(b) said test sample component matches said corresponding input sample component in location and/or if said test sample component equals said corresponding input sample component in location.

7. The method according to any one of the preceding claims, wherein, for each test sample of the one or more test samples, using the classification model to generate one or more confidence scores for said test sample comprises:

(a) generating, for each class of the predetermined set of classes, a confidence score indicative of a confidence that said test sample belongs to that class; or
(b) generating a single confidence score, said single confidence score being indicative of a confidence that said test sample belongs to a most likely class for said test sample.

8. The method according to any one of the preceding claims, wherein the result comprises:

(a) an indication that the input sample will not trigger the misclassification functionality if there is not at least one confidence score for at least one test sample that exceeds a predetermined threshold; and/or
(b) a classification for the input sample generated using the classification model.

9. The method according to any one of the preceding claims, wherein:

(a) the input sample is a first image, each of the input sample components comprises one or more pixels of the first image, and for each test sample of the one or more test samples, said test sample is a corresponding second image and each of the test sample components of said test sample comprises one or more pixels of that second image; or
(b) the input sample is a first amount of text, each of the input sample components comprises one or more words and/or characters of the first amount of text, and for each of the one or more test samples, said test sample is a corresponding second amount of text and each of the test sample components of said test sample comprises one or more words and/or characters of that second amount of text; or
(c) the input sample is an amount of audio representable as a first image, each of the input sample components comprises one or more pixels of the first image, and for each test sample of the one or more test samples, said test sample is a corresponding second image and each of the test sample components of said test sample comprises one or more pixels of that second image; or
(d) the input sample is a first array, each of the input sample components comprises one or more elements of the first array, and for each test sample of the one or more test samples, said test sample is a corresponding second array and each of the test sample components of said test sample comprises one or more elements of that second array.

10. The method according to any one of the preceding claims, comprising determining, based on the least one test sample, a characteristic of the input sample that triggers the misclassification functionality.

11. A method of identifying whether a classification model, that is arranged to classify an input sample according to a predetermined set of classes, comprises a misclassification functionality, the misclassification functionality due to the classification model having been trained, at least in part, on mislabelled samples, wherein the method comprises:

for each input sample of a plurality of input samples, using the method according to any one of the preceding claims to identify whether that input sample will trigger a misclassification functionality of the classification model; and
in response to the provision, for at least a predetermined number of input samples of the plurality of input samples, of an indication that that input sample will trigger the misclassification functionality, identifying that the classification model comprises the misclassification functionality.

**12.** A system arranged to carry out a method according to any one of claims 1 to 11.

**13.** A computer program which, when executed by one or more processors, causes the one or more processors to carry out a method according to any one of claims 1 to 11.

**14.** A computer-readable medium storing a computer program according to claim 13.

EP 4 357 985 A1

FIGURE 1

20

200

202 — Obtain input sample

204 — Generate, based on the input sample, one or more test samples

206 — For each of the one or more test samples, use the classification model to generate one or more confidence scores for that test sample

208 — Any confidence score(s) exceeds threshold?

No — Provide other result — 212

Yes

210 — Provide indication that the input sample will trigger the misclassification functionality

FIGURE 2a

250

202 — Obtain input sample

254 — Generate, next test sample

256 — Use the classification model to generate one or more confidence scores for that test sample

208 — Any confidence score(s) exceeds threshold?

No

258 — Generate another test sample

Yes

210 — Provide indication that the input sample will trigger the misclassification functionality

Yes

No

212 — Provide other result

FIGURE 2b

FIGURE 3a

FIGURE 3b

FIGURE 3c

FIGURE 3d

FIGURE 4

P=0

FIGURE 5a

P=0.25

FIGURE 5b

FIGURE 5c

FIGURE 5d

600

602

604

606

608

610

612

621

620

614

624

626

616

618

622

FIGURE 6

Europäisches
Patentamt
European
Patent Office
Office européen
des brevets

# EUROPEAN SEARCH REPORT

Application Number

EP 22 20 1849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAO YANSONG YANSONG GAO@NJUST EDU CN ET AL: "STRIP a defence against trojan attacks on deep neural networks", PROCEEDINGS OF THE 35TH ANNUAL COMPUTER SECURITY APPLICATIONS CONFERENCE, ACMPUB27, NEW YORK, NY, USA, 9 December 2019 (2019-12-09), pages 113-125, XP058468885, DOI: 10.1145/3359789.3359790 ISBN: 978-1-4503-7628-0 * abstract * * figures 3,4,6 * * page 115, paragraph 3 - page 117, paragraph 5 * | 1-14 | INV. G06N3/09 G06N3/084 G06F21/57 G06N3/094 G06N20/00 |
| A | KAMALESH PALANISAMY ET AL: "Rethinking CNN Models for Audio Classification", ARXIV.ORG, CORNELL UNIVERSITY LIBRARY, 201 OLIN LIBRARY CORNELL UNIVERSITY ITHACA, NY 14853, 22 July 2020 (2020-07-22), XP081725126, * abstract * * page 1, paragraph I. * * figure 1 * | 9 | |
| A | UDESHI SAKSHI ET AL: "Model Agnostic Defence Against Backdoor Attacks in Machine Learning", IEEE TRANSACTIONS ON RELIABILITY, IEEE SERVICE CENTER, PISCATAWAY, NJ, US, vol. 71, no. 2, 1 June 2022 (2022-06-01), pages 880-895, XP011910249, ISSN: 0018-9529, DOI: 10.1109/TR.2022.3159784 [retrieved on 2022-04-11] * the whole document * | 1-14 | TECHNICAL FIELDS SEARCHED (IPC) G06N G06F |

The present search report has been drawn up for all claims

| Place of search | Date of completion of the search | Examiner |
|---|---|---|
| The Hague | 28 March 2023 | Keresztury, Bence |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. GU ; B. DOLAN-GAVIT ; S. GARG.** BadNets: Identifying vulnerabilities in the machine learning model supply chain. *ArXiv:1708.06733v2,* 2019
- **L. DENG.** The mnist database of handwritten digit images for machine learning research. *IEEE Signal Processing Magazine,* 2012, vol. 29 (6), 141142

- **A. CHAKRABORTY et al.** Stop Click-bait: Detecting and preventing clickbaits in online news media. *2016 IEEE/ACM International Conference on Advances in Social Networks Analysis and Mining (ASONAM),* 2016, 9-16